Europäisches Patentamt

European Patent Office

Office européen des brevets

(19)

(11) Publication number: **0 283 596 B1**

(12) **EUROPEAN PATENT SPECIFICATION**

(45) Date of publication of patent specification: **10.04.91**    (51) Int. Cl.⁵: **H04Q 11/04**, H04Q 3/545

(21) Application number: **87201954.2**

(22) Date of filing: **12.10.87**

Consolidated with 87906578.7/0329663
(European application No./publication No.) by
decision dated 08.01.90.

(54) **Convertible switched telephone exchange.**

(30) Priority: **03.11.86 IT 2221186**

(43) Date of publication of application:
**28.09.88 Bulletin 88/39**

(45) Publication of the grant of the patent:
**10.04.91 Bulletin 91/15**

(84) Designated Contracting States:
**BE DE FR GB GR NL SE**

(56) References cited:
**EP-A- 0 073 078**
**US-A- 4 472 798**

**INTERNATIONAL SWITCHING SYMPOSIUM,
25th - 29th October 1976, session 223, paper
4, pages 1-8, Kyoto, JP; N.J. SKAPERDA et
al.: "Generic digital switching system"**

**POST OFFICE ELECTRICAL ENGINEERS
JOURNAL, vol. 73, April 1980, pages 27-34,
London, GB; G.P. OLIVER et al.: "Architecture
of System X"**

**IBM TECHNICAL DISCLOSURE BULLETIN, vol.
28, no. 7, December 1985, pages 2763-2766,
New York, US; "Ten-thousand-line digital
central office"**

(73) Proprietor: **ITALTEL SOCIETA ITALIANA
TELECOMUNICAZIONI s.p.a.**
**P.le Zavattari, 12**
**I-20149 Milano(IT)**

(72) Inventor: **Bovo, Amilcare**
**Piazzale Archinto, 1**
**I-20159 Milan(IT)**
Inventor: **Canato, Luigi**
**Via Pace, 14**
**I-20036 Meda (MI)(IT)**

(74) Representative: **Giustini, Delio**
**c/o Italtel Società Italiana Telecomunicazioni
s.p.a. P.O. Box 10**
**I-20019 Settimo Milanese (MI)(IT)**

## Description

This invention relates to a switched telephone exchange of the digital type designed to use a connection network of the mesh type to implement medium to low potential exchanges (eg. 20.000 users) or a connection network of the centralized type to implement high potential exchanges (eg. 100.000 users).

Modern digital switching exchanges usually comprise a plurality of switching modules designed to make telephone links either autonomously on their own, or else through connection networks if the called party is connected to a different module to the one to which the caller is connected.

Hence the cost of an exchange of this type is a function of the cost of the aforesaid modules and of the cost of the connection network.

The cost of the modules is more or less proportional to the number of lines connected to the switched exchange whilst the cost of the connection network is practically independent of the number of the aforesaid lines and assumes a predetermined entity, even in the presence of small capacity exchanges. Therefore, to sum up, the cost of the centralized organs (connection network) constitutes the so-called starting point "base" and means that the cost of the exchange is not proportional to the number of lines installed in it.

In order to minimize the cost per line and in order to allow the exchange to grow in a linear manner, in keeping with the increase in the number of installed lines, a switched exchange has been developed with a connection network of the "mesh" type (ie. made only of connection wires and consequently completely void of centralized organs), constituted by a voice switching section and a signalling switching section.

This type of exchange has optimum requisites as far as costs are concerned but has a saturation limit that can be quantified in approximately 20.000 users, that is determined by the complexity that the network assumes when said limit tends to be exceeded.

The aim of the present invention is to create a switched telephone exchange which allows a mesh type network to be used in order to optimize the costs involved, as described above, and at the same time also allows a centralized connection network to be used, in order to be able to convert said exchange into a high potential exchange, whenever an increase in user traffic occurs that means exceeding the aforesaid saturation limit.

Hence the object of the present invention is a switched telephone exchange comprising a plurality of modules (described in European Patent No. 73.078) designed to output/receive digital words on a voice connection network; said digital words being in parallel form coded on H bits of which I information bits, R redundancy bits and S service bits; each module comprising an access unit, a concentration unit and a control circuit. The said modules comprise also an adaptation circuit to make telephone links through a connection network of the mesh type or through a connection network of the centralized type, said centralized connection network comprising a plurality of sections for-switching voice signals and a distributor module for distributing signalling to the aforesaid modules and/or the aforesaid sections. A centralized connection network is known, for example, from the European Application No. 235.406 and in the paper "Generic digital switching system" by N.J. Skaperda et al, published in the Proceedings of the International Switching Symposium (session 223, paper 4, pages 1-8) Kyoto, Japan. The latter document also discloses the idea to have both mesh and centralized connection networks, but it does not disclose specific adaptation circuits.

The adaptation circuits comprise:
- parallel to serial conversion facilities designed to receive a data stream on their input containing digital words in parallel form coded on H bits, which is available on the output of the concentration unit and to convert it into a plurality of data streams containing digital words in serial form coded on I bits;
- a plurality of line facilities designed to receive the serial data streams output by the parallel to serial conversion facilities, or else by the connection network, on their input, after alignment operations have been carried out, and also designed to forward them to the connection network, or to serial to parallel conversion facilities, after having carried out code conversion operations;
- signalling processing facilities designed to receive/forward to the said control circuit all words concerning signalling picked up by the said access unit, to structure said words in message form, to exchange said messages with the aforesaid message distributor module;
- serial to parallel conversion facilities designed to receive a plurality of data streams containing digital words in serial form coded on I bits from the aforesaid line facilities and also to convert them into a data flow containing words in parallel form coded on H bits.

The exchange described above achieves the aim announced in as much as for medium to low potentials it allows as connection network of the mesh type to be used, and then when the aforesaid saturation limit is reached, it can be transformed into a high potential exchange by using a centralized connection network and the adaption circuits as described above.

Further characteristics of the invention will be made clear by the following description concerning an example that is in no way to be considered limitative in the invention's use and is completed by the enclosed drawings in which:

- figure 1 shows the block diagram of the switched telephone exchange according to the invention, equipped with a mesh type connection network;
- figure 2 shows the block diagram of one of the switching modules NC shown in fig. 1;
- figure 3 shows the block diagram of the switched telephone exchange according to the invention, equipped with a centralized connection network;
- figure 4 shows the block diagram of the adaption circuits CA shown in fig. 3;
- figure 5 shows the block diagram of the transmission voice interface IFT shown in fig. 4;
- figure 6 shows the block diagram of a line unit ULL shown in fig. 4;
- figure 7 shows the block diagram of the receiving voice interface IFR shown in fig. 4;
- figure 8 shows the block diagram of the intermodule signalling unit USI shown in fig. 4.

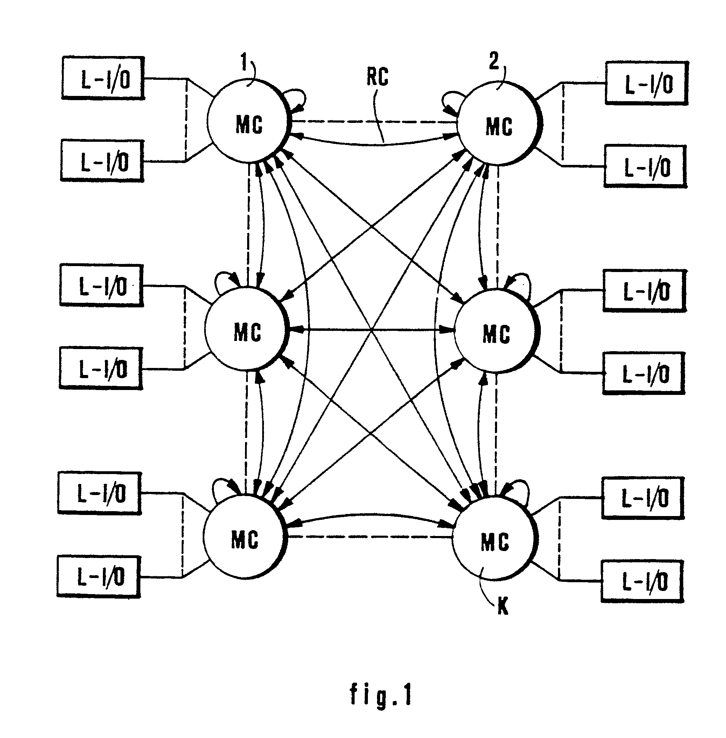

Fig. 1 shows the block diagram of the switched telephone exchange made according to the present invention and equipped with a connection network RC of the mesh type designed to implement medium - low potential exchanges (as described in USA Patent No. 4.597.075 corresponding to the European Patent No. 73.078). A plurality of switching modules MC are connected to the RC network, to which bidirectional access lines L-I/0 are connected. Furthermore, each MC module is linked to all the other modules and also receives its own outputs cn its input, by means of which telephone links between two lines L connected to the same M-I/0 module are made.

It must be borne in mind that each voice link is made by means of a bundle of 20 wires designed to allow transmission in parallel of digital words coded on 20 bits; intermodule signalling is on the other hand transmitted by means of 4 wires and consequently each pair of MC modules is actually connected by 24 wires, even if in fig. 1, for the sake of simplicity, just one single link is represented. The L-I/0 lines can have telephone sets, telegraph apparatus, data terminals, etc. connected to them.

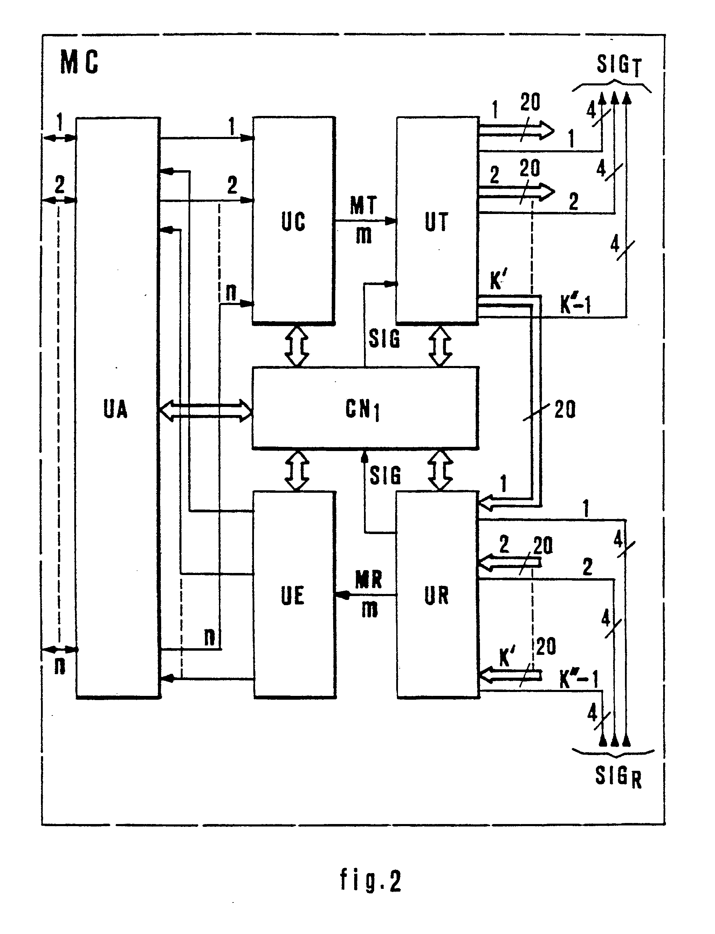

Fig. 2 shows the block diagram of a generical switching module MC which is constituted by an access unit UA to which n bidirectional lines are connected. The n digital outputs of the UA unit are input to a concentration unit UC designed to associate the aforesaid $\underline{n}$ inputs to $\underline{m}$ temporal phases

of a transmission multiple MT connected to a transmission unit UT with a number K of outputs equivalent to the number of MC switching modules.

In particular the UT unit has K' outputs by means of which voice signals are transmitted and also includes the presence of K"-1 links through which the signalling $SIG_T$ directed towards the remaining K-1 MC modules is transmitted. One of the K' outputs of the UT unit concerning the voice signals forms a closed loop around the module itself. The receiving section of the modules in question includes a receiving unit UR into which the K'-1 outputs of the other modules concerning voice signals are input, as well as the aforesaid loop and K"-1 links concering $SIG_R$ signalling received from the other MC modules. The UR unit is designed to associate these K' links to the $\underline{m}$ temporal phases of a receiving multiple MR which is connected to an expansion unit UE with n outputs directed to the access unit UA. The MC module also comprises a control circuit $CN_1$ designed to receive data concerning signalling from the access unit UA, and furthermore designed to pilot concentration/expansion operations on the basis of said data, and likewise to forward to said transmission unit UT, or receive from said receiving unit UR, the $SIG_T$ signalling or the $SIG_R$ signalling.

The connection network of the exchange in question, as described above, is constituted by multiples of wires. In particular the digital words concerning the voice signals are transmitted by means of multiples of 20 wires designed to allow the transmission of 20 bits in parallel which, besides the 8 information bits, also include redundancy bits, service bits, control bits, etc. The digital words concerning signalling, on the other hand, are transmitted by means of multiples of 4 wires.

In actual practice it has been found that the saturation limit of the switched exchange described above can be quantified in approximately 20.000 users, and this is due in particular to the complexity that the connection network between the various M-I/0 modules assumes when this limit tends to be exceeded.

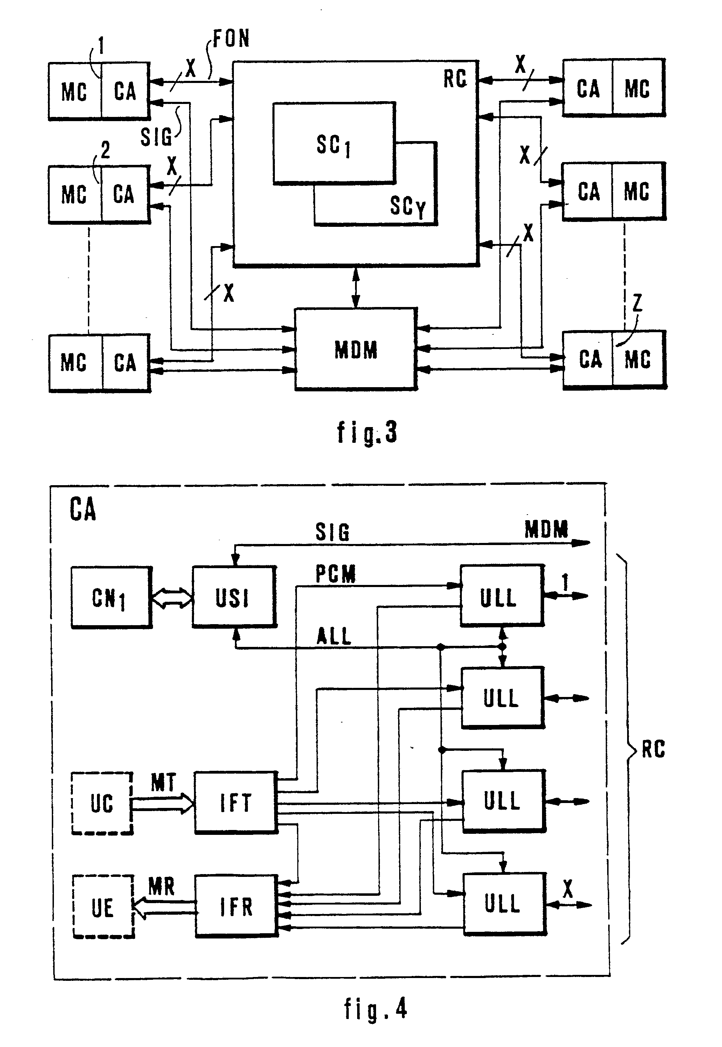

Fig. 3 shows the block diagram of the switched telephone exchange made according to this invention and equipped with a connection network of the centralized type to which Z switching modules are linked. As can be seen adaption circuits CA are associated to the MC switching modules which are fundamentally designed to:

- convert, the data stream being output, or else input, from the MC switching module into serial form, or else into parallel form;
- align the data streams coming from the RC connection network;
- manage signalling exchange between the modules.

The RC connection network comprises facilities for switching voice signals constituted by Y switching sections $SC_1,..., SC_Y$. Switching operations are carried out on the basis of the indications contained in the signalling messages $SIG_T$ -$SIC_R$ distributed within the exchange by a message distributor module MDM.

In fact signalling criteria are picked up by the MC modules, are converted into messages and sent, by means of a respective serial transmission channel, to the MDM unit. This is designed to switch the message to the module to which it is addressed, whether it is an SC section or an MC module.

In the same way as the signalling, the voice signals FON are exchanged between the RC connection network and the MC modules through serial transmission channels. In particular each MC module has at least one serial link towards each SC switching section and consequently each MC module has a bundle of at least x links connected to it: therefore, x can assume a value greater than, or equal to Y.

In order to better understand the way in which the structure described above works, the operations required to effect a telephone link between a module MC-I, to which a caller is connected, and a module MC-0, to which the called party is connected, will now be described.

The MC-I module picks up an engaging operation and generates a message containing both the called party's indicator and the caller's indicator. This message is forwarded to the MDM unit that switches it to the MC-0 module. This then proceeds to poll one of the SC switching sections by means of a message forwarded through the MDM unit, and if said SC section happens to have an input switching phase and an output switching phase free in that instant, it sends the message back to the MC-I/0 modules again by means of the MDM unit. The MC-I module then sends voice signals to the MC-0 module through the relevant serial transmission channel and the SC switching section involved in that phase of the switching operation.

As far as the aforegoing description is concerned, the link between the MC-I/0 modules and the RC connection network, is made by means of serial transmission channels connected to the CA adaption circuits which are illustrated in detail in fig. 4. Therefore, the CA circuits effect a parallel to serial, or serial to parallel conversion, of the signals being output, or input, from/into the MC modules.

By comparing figs. 2 and 4 it can be noticed that in the latter the MT transmission multiple is connected to a voice transmission interface IFT instead of to the aforesaid UT transmission unit, whilst the MR receiving multiple is connected to a voice receiving interface IFR instead of to said UR receiving unit.

The IFT unit is designed to organize the digital words that are input to it in a predetermined number of PCM streams, after having carried out parallel to serial conversion operations.

The PCM streams being output from the IFT unit are forwarded to a respective line unit ULL designed to manage local alarms on the PCM streams, and to convert the signals being input into them into Manchester II code (henceforth called M II).

In the opposite transmission direction the ULL units are designed to receive as their input a predetermined number of streams of signals coded in M II code and, after having carried out aligning operations and conversion into NRZ code. send said streams to the aforesaid IFR voice receiving interface.

This latter then converts the serial streams that are input to it into parallel form, and outputs digital words, obtained from the aforesaid streams, coded in parallel on 20 bits, on a bundle of 20 wires.

The CA adaption circuits also include the presence of an intermodule signalling unit USI designed to receive data concerning the SIG signalling from said $CN_1$ control circuit, and likewise also designed to send said data, in message form, to the aforesaid MDM unit by means of a serial transmission channel, and furthermore designed to receive alarm signalling ALL from the ULL units. The structure and nature of the messages described above are described in the said European patent application No. 235.406

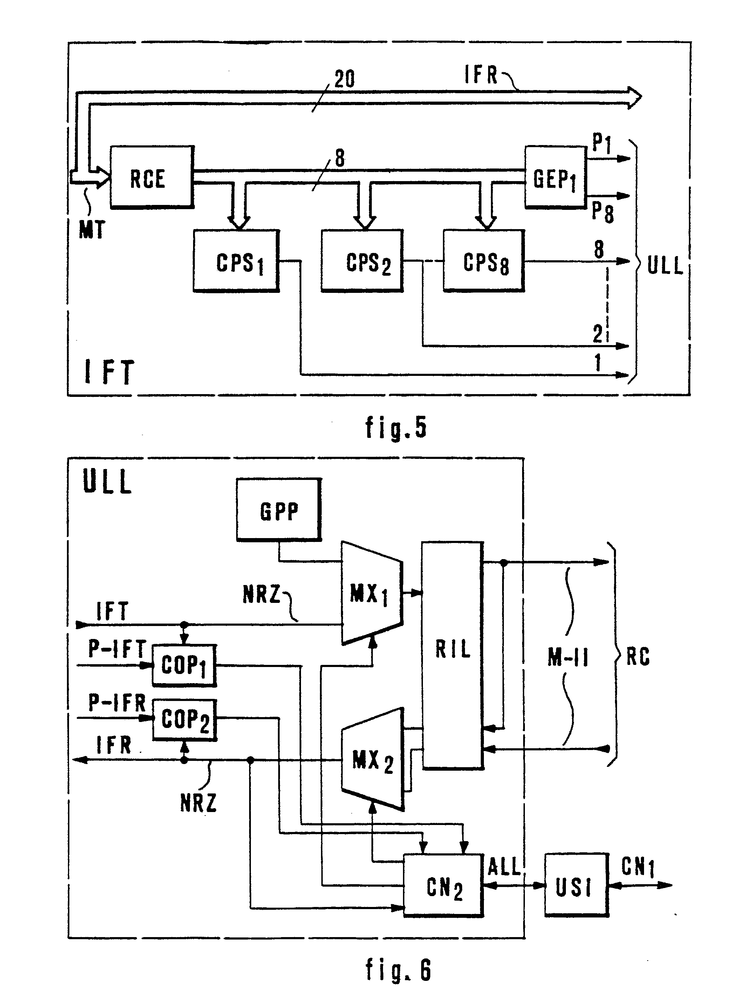

Fig. 5 shows the block diagram of the IFT voice transmission interface which is reached by a bundle of 20 wires by means of which digital words of H = 20 bits are transmitted in parallel. This bundle is forwarded to the IFR unit to create the loop mentioned above, and likewise is also input to an error detection and correction circuit RCE of a well known type designed to correct the information bits by using the redundancy bits and likewise also designed to output - in parallel - I = 8 information bits.

These are in turn input to a plurality of parallel to serial convertors $CPS_1, ..., CPS_8$, whose outputs correspond to the same number of serial streams of PCM signals, and are also input to a parity generator $GEP_1$ designed to output the parity bit on outputs $P_1, ..., P_8$ concerning a respective digital word corresponding to the output of the $CSP_1, ..., CSP_8$ units.

Fig. 6 shows the block diagram, in detail, of a generical ULL unit from fig. 4, into which a serial data stream encoded in NRZ code and coming from the IFT unit is input. This data is input to a multiplexer $MX_1$, the second input of which is connected to the output of a trial pattern generator GPP. The data stream coming from the IFT unit is also input to a parity controller $COP_1$ designed to activate a respective output when it detects the presence of an error which has occurred whilst transferring the digital words from the IFT unit to the ULL unit.

The output of the $MX_1$ unit is input to a line phase advancer RIL (described in the International patent application No. WO 87/01006 designed to convert the signals expressed in NRZ code into M II code.

The stream of signals thus encoded is forwarded to the RC connection network which is of the type illustrated in fig. 3.

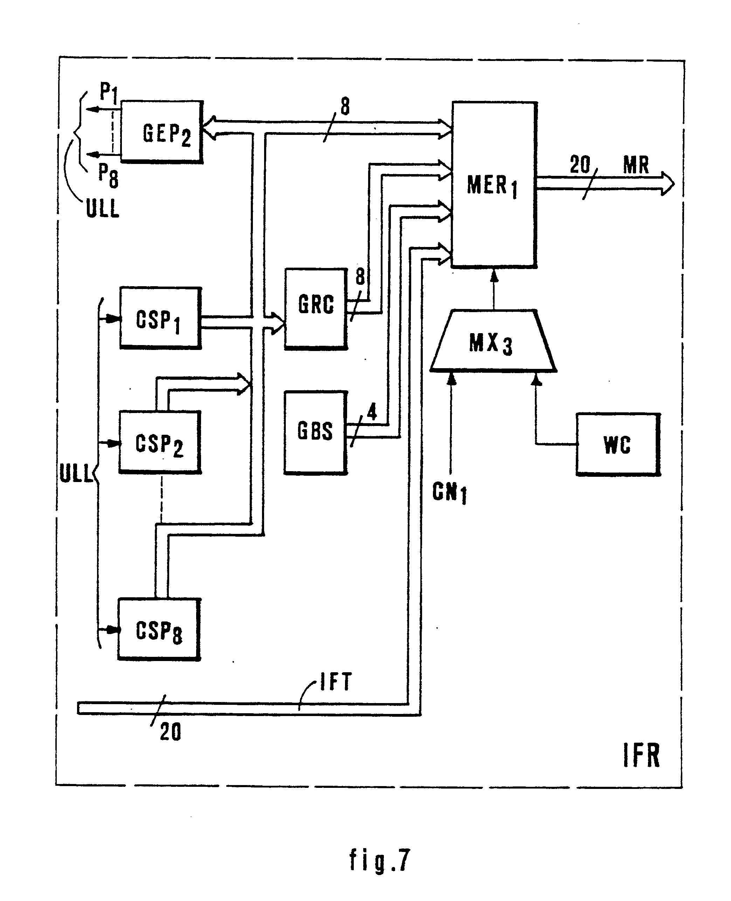

In the opposite transmission direction, the RIL unit receives a data stream in M II code on its input which has been output by the RC connection network, as well as the aforesaid data stream forwarded to the connection network. The RIL unit converts these two streams from M II code into NRZ code, carries out aligning operations, and then forwards them to a respective input of a multiplexer $M_2$, the output of which will be input to the IFR voice receiving interface and to a second even parity bit controller $COP_2$ which activates an output of its own if it detects an error that has occurred during transfer of the signals from the ULL unit to the IFR unit. It must, in fact, be borne in mind that in order to carry out all the even parity checks in the ULL unit, the IFR unit calculates the parity bits on the received data (see fig. 7) and sends these bits to the ULL unit.

The $MX_1$ and $MX_2$ multiplexers are piloted by a control circuit $CN_2$, which also receives the $MX_2$ output on its input in order to carry out testing operations by piloting the $MX_1$ unit in such a manner as to send a trial pattern to the RIL unit. This is then analyzed by the $CN_2$ unit through the local loop and the $MX_2$ unit, to obtain indications about the correct operation of some organs. The outputs of the $COP_1$ and $COP_2$ units are also input into the $CN_2$, unit which also includes the presence of a link with said intermodule signalling unit USI which acts as a supervision organ for the ULL units as it receives any alarm signals that might be output by $CN_2$ following the testing operations described above.

In the construction example described above reference has been made to a bidirectional NRZ data stream and a bidirectional M II stream; obviously, it is possible to manage a greater number of data streams by increasing the number of inputs on both the $MX_1$ and $MX_2$ multiplexers and on the RIL unit.

Fig. 7 shows the block diagram of the IFR voice receiving interface which is constituted by a plurality of serial to parallel convertors $CSP_1$, ...,

$CSP_8$, designed to receive their respective serial data stream in NRZ code on their inputs, and furthermore, also designed to output in a sequential manner and in parallel form on 8 wires, the digital words that are input into them in the form of serial streams.

The digital words available on the outputs of the CSP units are also input to a redundancy code generator GRC, designed to make 8 redundancy bits available in parallel form which have been calculated on the basis of the information bits that it receives on its input, as well as being input to a second even parity bit generator $GEP_2$ designed to calculate the even parity bits $P_1$, ..., $P_8$, concerning the digital words that are input to it. The $GEP_2$ unit forwards the parity bits $P_1$, ..., $P_8$ to the ULL unit in the manner described above with reference to fig. 6.

The 8 bits output from the CSP units and the 8 bits output from the GRC unit are input to a first receiving memory $MER_1$ into which are also input the 4 service bits supplied by a service bit generator GBS. In fact it must be recalled that in the switched exchange illustrated in figs. 1 and 2, the digital words are expressed by means of 20 bits in parallel, of which 8 are information bits, 8 are redundancy bits and 4 are service bits. Therefore, on the input of the $MER_1$ memory, 20 bit digital words are reconstructed and are written at the addresses supplied by a write counter WC through a multiplexer $MX_3$ designed as well to output the read addresses supplied by the control organ of the module, as described in the aforesaid USA patent.

The digital words expressed on 20 bits in parallel that are output from the IFT unit are also input to the $MER_1$ memory, the output of which is connected to the MR receiving multiple mentioned previously with reference to fig. 2.

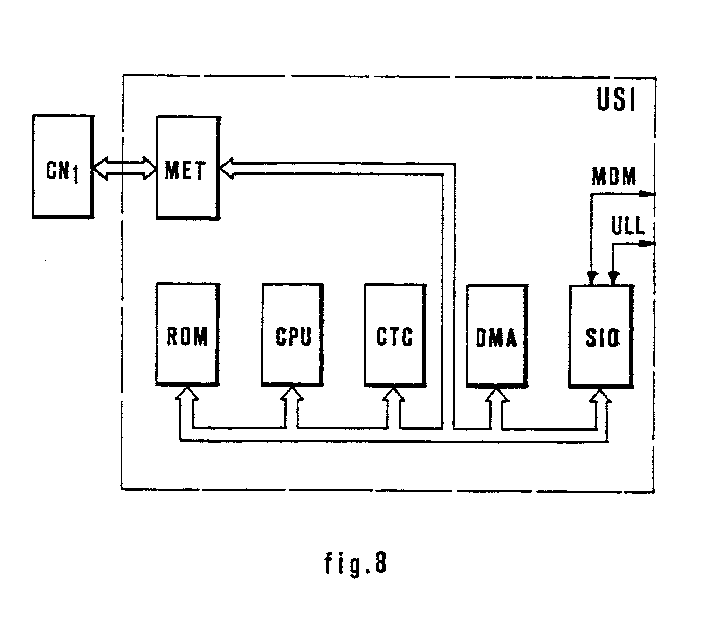

Fig. 8 shows the block diagram of the USI unit which is composed of a CPU (Central Processor Unit) which has the following units connected to its bus:

- a ROM read only memory designed to memorize the programme on the basis of which the CPU unit operates;
- a CTC unit designed to output signals for timing of the operations carried out by the CPU unit;
- a DMA unit designed to carry out memory direct transfer operations;
- an S10 unit designed to serialize and forward to the said MDM message distributor module and said ULL line facilities, the digital words that are input to it in parallel form, and likewise also designed to carry out the complementary operation in the opposite transmission direction;

- a buffer store MET designed to carry out an information exchange between the CPU unit and the CN₁ unit.

When the control circuit CN₁ of the MC module receives the data concerning the signalling criteria from the UA access unit, it transfers said data to the MET buffer store which is then read by the CPU unit.

This unit then generates a message structured as foreseen by the operating programme stored in the ROM unit and also forwards said message to the MDM unit through the DMA and S10 units.

The CPU unit also receives alarm signals from the ULL units as was previously described with reference to fig. 6.

## Claims

1. Telephone switching exchange comprising a plurality of switching modules (MC) designed to input/output digital words on a voice connection network (RC), wherein said digital words are in parallel form coded on H bits of which I information bits, R redundancy bits, S service bits, each switching module (MC) comprising at least an access unit (UA), a concentration unit (UC, UR), and a control circuit (CN), characterized by the fact that each of said switching modules (MC) comprises an adaptation circuit (CA) allowing the mutual connection of said switching modules (MC) both through a connection network (RC) of the full mesh type and through a connection network of centralized type comprising a plurality of sections (SC) for switching voice signals and a message distributor module (MDM) for switching signalling; further characterized by the fact that the said adaptation circuits (CA) comprise:

   - parallel to serial conversion facilities (IFT) designed to receive a data stream on their input containing digital words in parallel form encoded on H bits available on the output of the concentration unit (UC) and convert said stream into a plurality of data streams containing digital words in serial form encoded on I bits;
   - a plurality of line facilities (ULL), designed to receive on their input the serial data streams being output by the parallel to serial conversion facilities (IFT), or by the connection network (RC) after having carried out alignment operations on them, and also designed to forward them to the connection network (RC), or to serial to parallel conversion facilities (IFR), after having carried out code conversion operations;
   - signalling processing facilities (USI) designed to receive-forward to the said control circuit (CN₁) the words concerning signalling detected by said access unit (UA), to structure said words in message form and to exchange said messages with the aforesaid message distributor module (MDM);
   - serial to parallel conversion facilities (IFR) designed to receive a plurality of data streams from the aforesaid line facilities (ULL) containing digital words in serial form encoded on I bits, and furthermore also designed to convert them into a data stream containing digital words in parallel form encoded on H bits.

2. Switched telephone exchange as defined in claim 1 characterized by the fact that the said parallel to serial conversion facilities (IFT) include:
   - an error detection and correction circuit (RCE) designed to receive a data stream in parallel form encoded on H bits on its input, which is output by the said concentration unit (UC), and likewise also designed to convert it into a data stream, again in parallel form, encoded on I bits;
   - a plurality of parallel to serial convertors (CPS₁, ..., CPSₖ) designed to convert the data stream available on the output of the error detection and correction circuit (RCE) into a plurality of serial data streams;
   - a connection loop designed to forward the data stream present on the input of the error detection and correction circuit (RCE) to the serial to parallel conversion facilities;
   - a first even parity bit generator (GEP₁) designed to receive on its input the I information bits of each digital word being input to the parallel to serial conversion facilities (IFT), and to forward the parity bits (P₁, ..., P₂) calculated from them to the said line facilities (ULL).

3. Switched telephone exchange as defined in claim 1 characterized by the fact that the said line facilities (ULL) include:
   - a first multiplexer (MX₁) designed to receive on its first input at least a serial data stream and on its second input the output of a trial pattern generator (GPP);
   - a line phase advancer circuit (RIL) designed to forward to the connection network (RC), or to the said serial to parallel conversion facilities (IFR), the digital words that are input to it after having carried out an alignment operation and a code conversion operation;

- a second multiplexer (MX$_2$) designed to receive on its input the data streams available on the output of the line phase advancer circuit (RIL) which come from, or are being forwarded to, the connection network (RC);

- a first even parity bit control circuit (COP$_1$) connected to the first input of the first multiplexer (MX$_1$), and designed to have the parity bits calculated by the parallel to serial conversion facilities (IFT) input to it;

- a second even parity bit control circuit (COP$_2$) connected to the output of the second multiplexer MX$_2$), and designed to have the parity bits calculated by the serial to parallel conversion facilities (IFR) input to it;

- a second control circuit (CN$_2$) designed to pilot said first and second multiplexers, to receive on its input the data stream output by the second multiplexer (MX$_2$), as well as to extract digital words from said data streams concerning testing operations, to receive on its input the outputs of the first and second parity bit control circuits (COP$_1$, COP$_2$), and to forward the alarm signals received from the units connected to it, to the said signalling unit (USI).

4. Telephone exchange as defined in claim 1 characterized by the fact that the said serial to parallel conversion facilities (IFR) include:

- a plurality of serial to parallel convertors (CSP$_1$, ..., CSP$_8$) designed to receive on their input a plurality of serial data streams containing digital words encoded on I bits and also designed to output a data stream in parallel form on I wires;

- a receiving memory (MER$_1$) with m storage areas, designed to receive on its input H bits in parallel form by means of said loop of the parallel to serial conversion facilties (IFT), as well as, again in parallel form, the I bits output from the serial to parallel convertors (CSP), the R redundancy bits supplied by a parity code generator (GRC), the S service bits supplied by a service bit generator (GBS);

- a third multiplexer (MX$_3$) designed to supply the write-read addresses to the

said receiving memory (MER$_1$) and furthermore also designed to receive on one input the outputs of a write address generator (WC) and on the other input, the read addresses supplied by the said first control circuit (CN$_1$);

- a second parity bit generator (GEP$_2$), connected to the output of said serial to parallel convertors (CSP$_1$, ..., CSP$_8$), designed to calculate the parity bits (P$_1$, ...,P$_8$) of the words that are input to it and also designed to forward them to said line facilities (ULL).

5. Telephone exchange as defined in claim 1 characterized by the fact that said signalling processing facilities (USI) include the presence of a CPU which has the following units connected to its bus:

- a read only memory (ROM) designed to memorize the programme on the basis of which the CPU unit operates;

- a unit (CTC) designed to output signals for timing of the operations carried out by the CPU unit;

- a unit (DMA) designed to carry out memory direct transfer operations;

- a unit (S10) designed to serialize and forward to the said message distributor module (MD) and said line facilities (ULL), the digital words that are input to it in parallel form, and likewise also designed to carry out the complementary operation in the opposite transmission direction;

- a buffer store (MET) designed to carry out an information exchange between the said CPU unit and the said first control circuit (CN$_1$).

**Revendications**

1. Central téléphonique de commutation comprenant une pluralité de modules de commutation (MC) conçus pour recevoir/émettre des mots digitaux dans un réseau de connexion vocale (RC), où lesdits mots digitaux sont en forme parallèle, codés sur H bits, dont I bits d'information, R bits de redondance, S bits de Service, chaque module de commutation (MC) renfermant au moins une unité d'accès (UA), una unité de concentration (UA,UR) et un circuit de contrôle (CN), caractérisé par le fait que chacun desdits modules de commutation (MC) comprend un circuit d'adaptation (CA) permettant la liaison réciproque desdits modules de commutation (MC), aussi bien au moyen d'un réseau de connection (RC) du type à maille intégrale, qu'au moyen d'un réseau de connection du type centralisé renfermant une pluralité de sections (SC) pour les signaux vocaux de commutation et un module distributeur de messages (MDM) pour la commutation de la signalisation; caractérisé aussi par le fait que lesdits circuits d'adaptation (CA) comprennent:

- des moyens de conversion parallèle-série (IFT) conçus pour recevoir à leur entrée un flot de données contenant des mots digitaux en forme parallèle codés sur H bits, disponibles à la sortie de l'unité de concentration (UC), et pour convertir ledit flot en une pluralité de flots de données contenant des mots digitaux en forme séquentielle, codés sur I bits;

- une pluralité de moyens de ligne (ULL), conçus pour recevoir à leur entrée les flots de données sequentielles emis par les moyens de conversion parallèle-série (IFT), ou par le réseau de connexion (RC), après effectué des opérations d'alignement sur les mêmes; également conçus pour les envoyer au réseau de connexion (RC) ou à des moyens de conversion sérieparallèle (IFR), après avoir effectué des opérations de conversion de code;

- des moyens de traitement de la signalisation (USI), conçus pour recevoir/envoyer audit circuit de contrôle (CN₁) les mots concernant la signalisation détectés par ladite unité d'accès (UA), pour structurer ces mots en forme de messages et échanger ces messages avec le module distributeur de messages (MDM) susdit;

- des moyens de conversion série-parallèle (IFR), conçus pour recevoir une pluralité de flots de données provenant des moyens de ligne (ULL) susdits, contenant des mots digitaux en forme séquentielle, codés sur I bits, et de même conçus par les convertir en un flot de données contenant des mots digitaux en forme parallèle, codés sur H bits.

2.  Central téléphonique de commutation, comme il est dit à la revendication 1, caractérisé par le fait que lesdits moyens de conversion parallèle-série (IFT) comprennent:

- un circuit de détection et correction d'erreurs (RCE), conçu pour recevoir à son entrée un flot de données en forme parallèle, codé sur H bits, provenant de ladite unité de concentration (UC), de même conçu pour le convertir en un flot de données, également en forme parallèle, codé sur I bits;

- une pluralité de convertisseurs parallèle-série (CPS₁, ..., CPCₖ), conçus pour convertir le flot de données disponible à la sortie du circuit de détection et correction d'erreurs (RCE) en une pluralité de flots de données séquentielles;

- une boucle de connexion, conçue pour pour envoyer aux moyens de conversion série-parallèle, le flot de donnée se trouvant à la sortie du circuit de détection et correction d'erreurs (RCE);

- un premier générateur du bit de parité (GEP₁), conçu pour recevoir à son entrée les I bits d'information de chaque mot digital arrivant à l'entrée des moyens de conversion parallèle-série (IFT) et pour envoyer les auxdits moyens de ligne (ULL) les bits de parité (P₁, ..., P₁) calculés par ces moyens.

3.  Central téléphonique de commutation, comme il est dit à la revendication 2, caractérisé par le fait que lesdits moyens de ligne (ULL) comprennent:

- une premier multiplexeur (MX₁), conçu pour recevoir à sa première entrée au moins un flot de données séquentielles et à sa deuxième entrée la sortie d'un générateur de configuration d'essai (GPP);

- un circuit compensateur de phase de la ligne (RIL), conçu pour envoyer au réseau de connexion (RC) ou auxdits moyens de conversion série-parallèle (IFR), les mots digitaux qu'il reçoit en entrée, après avoir effectué une opération d'alignement et une opération de conversion de code;

- un deuxième multiplexeur (MX₂), conçu pour recevoir à son entrée les flots de données disponibles à la sortie du circuit compensateur de phase de la ligne (RIL), provenant du ou envoyés au réseau de connexion (RC);

- un premier circuit de contrôle des bits de parité (COP₁), connecté à la première entrée du premier multiplexeur (MX₁), conçu pour recevoir à son entrée les bits de parité calculés par les moyens de conversion parallèle-série (IFT);

- une deuxième circuit de contrôle des bits de parité (COP₂), connecté à la sortie du deuxième multiplexeur (MX₂), conçu pour recevoir à son entrée les bits de parité calculés par les moyens de conversion sérieparallèle (IFR);
- un deuxième circuit de contrôle (CN2), conçu pour piloter lesdits premier et deuxième multiplexeurs, pour recevoir à son entrée le flot de données disponible à la sortie du deuxième multiplexeur (MX2), de même que pour extraire desdits flots de données les mots digitaux concernant des opérations d'essai, pour recevoir à son entrée les sorties du premier et du deuxième circuits de contrôle des bits de parité (COP1, COP2), et pour envoyer à ladite unité de signalisation (USI) les signaux d'alarme provenant des unités connectées au même.

4. Central téléphonique comme il est dit à la revendication 1, caractérisé par le fait que lesdits moyens de conversion série-parallèle (IFR) comprennent:
- une pluralité de convertisseurs série-parallèle (CSP1, ..., CSP8), conçus pour recevoir à leur entrée une pluralité de flots de données séquentielles contenant des mots digitaux codés sur I bits, également conçus pour l'émission d'un flot de données en forme parallèle sur I fils;
- une mémoire de réception (MER1), munie de $\overline{m}$ zones de mémoire, conçue pour recevoir à son entrée H bits en forme parallèle au moyen de ladite boucle des moyens de conversion parallèle-série (IFT), ainsi que, également en forme parallèle, les I bits disponibles à la sortie des convertisseurs série-parallèle (CSP), les R bits de redondance émis par un générateur du code de parité (GRC), les S bits de service émis par un générateur des bits de service (GBS);
- un troisième multiplexeur (MX3), conçu pour fournir les adresses d'écriture/lecture à ladite mémoire de réception (MER1), de même conçu pour recevoir à une entrée les sorties d'un générateur d'adresses d'écriture (WC) et sur l'autre entrée les adresses de lecture fournies par ledit premier circuit de contrôle (CN1);
- un deuxième générateur du bits de parité (GEP2), connecté à la sortie desdits convertisseurs sérieparallèle (CSP1, ... CSP8), conçu pour calculer les bits de parité (P1, ... P8) des mots qu'il reçoit à son entrée, ainsi que pour les envoyer auxdits moyens de ligne (ULL).

5. Central téléphonique, comme il est dit à la revendication 1, caractérisé par le fait que lesdits moyens de traitement de la signalisation (USI) prévoient la présence d'une unité de traitement centrale (CPU), au bus de laquelle sont connectées les unités suivantes:
- une mémoire morte (ROM), conçue pour mémoriser le programme sur la base duquel l'unité CPU opère;
- une unité (CTC), conçue pour émettre les signaux pour la synchronisation des opérations effectuées par l'unité CPU;
- une unité (DMA), conçue pour effectuer les opérations de transfert direct de mémoire;
- une unité (S10), conçue pour la mise en série et l'envoi audit module distributeur de messages (MD) et auxdits moyens de lignes (ULL) les mots digitaux qu'elle reçoit en entrée en forme parallèle, également conçue pour effectuer l'opération complémentaire dans les sens de transmission contraire;
- une mémoire tampon (MET), conçue pour effectuer l'échange d'informations entre ladite unité CPU et ledit premier circuit de contrôle (CN1).

**Ansprüche**

1. Fernsprechzentrale, beinhaltend eine Mehrzahl von Umschaltmodulen (MC), geeignet zum Ein/Ausschalten von Digitalwörtern in einem phonischen Anschlussnetz (RC), wo die genannten Digitalwörter in Parallelform an H-Bit codiert sind, von denen: I = Informationsbit; R = Redundanzbit, S = Servicebit; jeder Umschaltmodul (MC) beinhaltet mindestens eine Zugangseinheit (UA), eine Konzentrationseinheit (UC, UR) und einen Kontrollkreis (CN), von der Tatsache gekennzeichnet, dass jeder der oben genannten Umschaltmodulen (MC) einen Anassungskreis (CA) enthält, der den gegenseitigen Anschluss der genannten Umschaltmodule (MC) sowohl durch ein Anschlussnetz (RC) des Vollmaschentypes als auch durch ein Anschlussnetz des zentralisierten Types gestattet, beinhaltend eine Mehrzahl von Teilen (SC) für phonische Umschaltsignale und eine Meldungverteileinheit (MDM) für die Umschaltmeldung; ferner davon gekennzeichnet, dass die genannten Anpassungskreise (CA) folgendes beinhalten:
- Parallel/Serial-Umwandlungsmittel (IFT), geeignet zum Empfangen am deren Eingang eines Datenflusses, enthaltend Digitalwörter in Parallelform, an H-Bit codiert, am Ausgang der Konzentrationseinheit (UC) verfügbar, und zur Umwandlung des genannten Flusses in eine Mehrzahl von Datenflüssen, die Digitalwörter in Serialform, an I-Bit codiert, beinhalten;

- eine Mehrzahl von Leitungsmitteln (ULL), geeignet zum Empfangen am deren Eingang der Serialdatenfluesse als Ausgang von den Parallel/Serial-Umwandlungsmitteln (IFT) oder vom Anschlussnetz (RC), nach der erfolgten Ausrichtung an denselben, und auch geeignet zum Weiterleiten der obigen Flusse zum Anschlussnetz (RC) oder zu den Serial/Parallel-Umwandlungsmitteln (IFR), nach der erfolgten Code-Umwandlung;

- signalverarbeitungsmittel (USI) geeignet zum Empfangen/ Weiterleiten zum oben genannten Kontrollkreis (CN$_1$) der Wörter betreffend die Meldung, die von den genannten Zugangseinheit (UA) erfasst wird, zum Aufbauen der genannten Wörter als Meldungsform und zum Austauschen der genannten Meldung mit der oben erwähnten Verteileinheit (MDM);

- Serial/Parallel-Umwandlungsmittel (IFR) geeignet zum Empfangen einer Mehrzahl von Datenflüssen von den oben erwähnten Leitungsmitteln (ULL), beinhaltend Digitalwörter in Serialform, an I-Bit codiert, und ferner auch geeignet zur Wandlung der erwaehnten in einen Datenfluss, beinhaltend Digitalwörter in Parallelform, an H-Bit codiert.

2. Fernsprechzentrale, wie im Anspruch 1 angegeben, von der Tatsache gekennzeichnet, dass die genannten Parallel/Serial-Umwandlungsmittel (IFT) folgendes beinhalten:

- einen Fehlererfassungs - und - Beseitigungskreis (RCE), geeignet zum Empfengen eines Datenflusses in Parallelform, an H-Bit codiert, am dessen Eingang, als Ausgang von der genannten Konzentrationseinheit (UC), und ferner auch geeignet zur Wandlung desselben Flusses in einen Datenfluss, immer in Parallelform, am I-Bit codiert;

- eine Mehrzahl von Parallel/Serial-Wandlern (CPS$_1$ ÷ CPS$_k$) geeignet zur Wandlung des Datenflusses, der am Ausgang des RCE-Kreises (Fehlererfassung und - Beseitingung) verfügbar ist, in eine Mehrzahl von Serialdatenflüssen.

- einen Anschlusskreis, geeignet zum Weiterleiten des Datenflusses am Eingang des RCE-Kreises (Fehlererfassung und - Beseitingung) zu den Serial/Parallel-Umwandlungsmitteln;

- einen ersten Paritätbitgenerator (GEP$_1$),

geeignet zum Empfangen an dessen Eingang der I-Informationsbit jedes Digitalwortes als Eingang zu den Parallel/Serial-Umwandlungsmitteln (IFT), und zum Weiterleiten der von ihm berechneten Paritätsbit (P$_1$ ÷ P$_2$) zu den genannten Leitungsmitteln (ULL).

3. Fernsprechzentrale, wie im Anspruch 1 angegeben, von der Tatsache gekennzeichnet, dass die genannten Leitungsmittel (ULL) folgendes beinhalten:

- einen ersten Multiplexer (MX$_1$) geeignet zum Empfangen an seinem ersten Eingang mindestens eines Serialdatenflusses und an seinem zweiten Eingang des Ausganges eines Prüfpatterngenerators (GPP);

- einen Leitungsphasenausgleicher (RIL), geeignet zum Weiterleiten und das Anschlussnetz (RC), oder zu den genannten Serial/Parallel-Umwandlungsmitteln (IFR), der Digitalwörter am Eingang zu ihm nach den erfolgten Ausrichtung und Code-Umwandlung;

- einen zweiten Multiplexer (MX$_2$) geeignet zum Empfangen an dessen Eingang der Datenflüsse, die am Ausgang des Leitungsphasenausgleichers (RIL) verfügbar sind, die vom Anschlussnetz (RC) herkommen oder zum Anschlussnetz (RC) weitergeleitet werden;

- einen ersten Paritätsbit-Kontrollkreis (COP$_1$), mit dem ersten Eingang des ersten Multiplexer (MX$_1$) angeschlossen, dazu geeignet, am Eingang die Paritätsbit zu bekommen, die von den Parallel/Serial-Umwandlungsmitteln (IFT) berechnet werden;

- einen zweiten Paritätsbit-Kontrollkreis (COP$_2$), mit dem Ausgang des zweiten Multiplexer (MX$_2$) angeschlossen, dazu geeignet, am Eingang die Paritätsbit zu bekommen, die von den Serial/Parallel-Umwandlungsmitteln (IFR) berechnet werden;

- einen zweiten Kontrollkreis (CN$_2$), geeignet zur Steuerung der genannten ersten und zweiten Multiplexer, zum Empfang an seinem Eingang der Ausgänge der Datenflüsse vom zweiten Multiplexer (MX$_2$) sowie zum Auslesen von Digitalwörtern aus den genannten Datenflüssen betreffend die Prüfverfahren, zum Empfang an seinem Eingang der Ausgänge der ersten und der zweiten Paritätsbit-Kontrollkreise (COP$_1$, COP$_2$) und zum Weiterleiten der Alarmsignale, die von den mit ihm angeschlosenen Einheiten empfangen werden, zu der genannten Signaleinheit (USI).

4. Fernsprechzentrale, wie im Anspruch 1 angegeben, von der Tatsache gekennzeichnet, dass die genannten Serial/Parallel-Umwandlungsmittel (IFR) folgendes beinhalten:

- eine Mehrzahl von Serial/Parallel-Umsetzern ($CsP_1$ - $CSP_8$) geeignet zum Empfangen am deren Eingang einer Mehrzahl von Serialdatenflüssen, die Digitalwörter, an I-Bit codiert, beinhalten, und auch dazu geeignet, einen Datenfluss in Parallelform an I-Drähten auszugeben;

- einen Empfangsspeicher ($MER_1$) mit $\overline{m}$ Speicherzonen, geeignet zum Empfang am dessen Eingang von H-Bit in Parallelform durch den oben genannten Kreis der Parallel/Serial-Umwandlungsmittel (IFT), sowie, immer in Parallelform, der I-Bit-Ausgänge aus den Serial/Parallel-Umwandlern (CSP), der R-Redundanzbit, die von dem Paritätcodegenerator (GRC) geliefert werden, der S-Servicebit, die von dem Servicebitgenerator (GBS) geliefert werden;

- einen dritten Multiplexer ($MX_3$), geeignet zur Lieferung der Schreib-Lese-Adressen zu dem genannten Empfangsspeicher ($MER_1$) und ferner dazu geeignet, an einem Eingang die Ausgänge eines Schreibadressgenerators (WC), und am anderen Eingang die Leseadressen zu empfangen, die vom genannten ersten Kontrollkreis ($CN_1$) geliefert sind;

- einen zweiten Paritätsbitgenerator ($GEP_2$), mit dem Ausgang der oben genannten Serial/Parallelwandler ($CSP_1$ _ $CSP_8$) angeschlossen, geeignet zur Berechnung der Paritätsbit ($P_1$ _ $P_8$) der Wörter am Eingang, und auch geeignet zum Weiterleiten derselben zu den genannten Leitungsmitteln (ULL).

5. Fernsprechzentrale, wie im Anspruch 1 angegeben, von der Tatsache gekennzeichnet, dass die oben genannten Signalverarbeitungsmittel (USI) das Vorhandensein einer CPU vorsehen, an deren Bus die folgenden Einheiten angeschlossen sind:

- ein ROM-Speicher (nur Lesespeicher), geeignet zum Speichern der Programme, auf derer Basis die CPU arbeitet;

- eine Einheit (CTC) dazu geeignet, Signale für die Taktung der von der CPU vervollständigten Operationen auszugeben;

- eine Einheit (DMA) dazu geeignet, direkte Speicherversetzungen vorzunehmen;

- eine Einheit (S10), dazu geeignet, die Digitalwörter zu serialisieren und zur genannten Meldungsverteileinheit (MD) und zu den genannten Leitungsmitteln (ULL) zu weiterleiten, als Eingang in Parallelform, und ferner dazu geeignet, die Nebenoperationen in der passenden Uebertragungsrichtung vorzunehmen;

- einen Pufferspeicher (MET), dazu geeignet, einen Informationswechsel zwischen der genannten CPU und dem genannten ersten Kontrollkreis ($CN_1$) vorzunehmen.

fig.1

fig.2

fig.3

fig.4

14

fig.5

fig. 6

fig.7

fig.8